# EUROPÄISCHE PATENTSCHRIFT

(11) **EP 3 221 169 B1**
(45) Veröffentlichungstag und Bekanntmachung des Hinweises auf die Patenterteilung: **07.04.2021**
(21) Anmeldenummer: 15780906.2
(22) Anmeldetag: 15.10.2015
(51) Int. Cl.: B60J 7/22

(54) **ABWEISERELEMENT FÜR EINEN WINDABWEISER EINES KRAFTFAHRZEUGS**
DEFLECTION ELEMENT FOR A WIND DEFLECTOR OF A MOTOR VEHICLE
ÉLÉMENT DÉFLECTEUR POUR UN DÉFLECTEUR D'AIR D'UN VÉHICULE À MOTEUR

(30) Priorität: 18.11.2014 DE 102014016953
(43) Veröffentlichungstag der Anmeldung: 27.09.2017
(73) Patentinhaber: TB&C Outsert Center GmbH, 35745 Herborn (DE)
(72) Erfinder: FAULSTICH, Rene, 35444 Biebertal (DE); GROOS, Hartmut, 35649 Bischoffen (DE); POST, Sebastian, 35578 Wetzlar (DE)
(74) Vertreter: Weilnau, Carsten
(86) Internationale Anmeldenummer: PCT/EP2015/073934
(87) Internationale Veröffentlichungsnummer: WO 2016/078839

(56) Entgegenhaltungen:
- WO-A1-2007/054083
- DE-A1-102009 041 291
- DE-U1- 9 309 968
- KR-A- 20100 032 078
- NL-A- 7 811 769
- US-A- 1 877 065
- US-A- 3 960 197
- US-A- 5 301 737
- US-A1- 2008 110 583

## Beschreibung

### Technisches Gebiet

Die vorliegende Erfindung betrifft ein Abweiserelement für einen Windabweiser eines Kraftfahrzeugs. Ferner betrifft die Erfindung einen mit einem derartigen Abweiserelement ausgestatteten Windabweiser, ein dementsprechendes Kraftfahrzeug sowie ein Herstellungsverfahren für derartige Abweiserelemente bzw. Windabweiser.

### Hintergrund

Windabweiser werden in Verbindung mit Schiebedachsystemen von Kraftfahrzeugen seit langem verwendet. Bei geöffnetem Schiebedach erfüllt der Windabweiser die Funktion, etwaige, insbesondere durch periodische Luftdruckänderungen hervorgerufene akustische Störgeräusche, die im Fahrzeuginneren insbesondere als Wummern wahrnehmbar sind, zu unterdrücken bzw. deren Entstehung zu unterbinden.

Gängige Windabweiser sind üblicherweise im Bereich des in Fahrtrichtung vorn liegenden Randes einer Schiebedachöffnung am Kraftfahrzeugdach angeordnet. Ein beweglich gegenüber der Karosserie gelagertes Ausstellelement des Windabweisers geht bei geöffnetem Schiebedach in eine gegenüber einer Grundstellung angehobene oder aufgespannte Gebrauchsstellung über. Ein mit dem als Aussteller zu bezeichnenden Ausstellelement verbundenes Abweiserelement, typischerweise in Form eines flexiblen Flächengebildes, insbesondere in Form eines Netzes, wird hierdurch aufgespannt. Das luftdurchlässige Flächengebilde führt bei einem bewegten Kraftfahrzeug zu einer gezielten lokalen Luftverwirbelung, sodass etwaige akustische Störgeräusche unterdrückt werden oder deren Entstehung weitgehend vollständig unterbunden wird.

Hinsichtlich Aufbau und Herstellung existieren unterschiedlichste Windabweiserkonzepte. So beschreibt beispielsweise die DE 10 2009 041 291 A1 einen Windabweiser mit einem aufspannbaren Abweiserelement, dessen oberer Randbereich über eine Randleiste an einem verschwenkbaren Ausstellbügel befestigt ist, der einen Bügelkörper aus Kunststoff umfasst. Die Randleiste des Abweiserelements ist hierbei nach einem Schweißverfahren an dem Bügelkörper fixiert.

Ein anderes Windabweiserkonzept ist hingegen in der WO 2012/052247 A1 beschrieben. Dort ist vorgesehen, das aufspannbare und flexible Abweiserelement über eine obere Randleiste an einem verschwenkbaren Ausstellbügel zu befestigen. Die obere Randleiste sowie eine untere Randleiste sind hierbei Bestandteile einer umlaufenden Kunststoffrandumspritzung des Abweiserelements. Die hier vorgesehene Randumspritzung umfasst ferner Rastelemente, mittels derer eine formschlüssige, etwa rastende Anbindung des Abweiserelements am Abweiserbügel realisierbar ist.

Des Weiteren ist aus der DE 10 2005 054 186 B4 ein Windabweiser im Kraftfahrzeugbereich bekannt. Zum Verbinden eines Abweiserelements mit einem Aussteller ist dort eine Anbindungseinrichtung mit einem zweiteiligen Basisbereich beschrieben, welcher aus zwei Einzelteilen ausgebildet ist. Ein erstes Einzelteil weist mehrere Einsteckzapfen und ein zweites Einzelteil weist komplementär dazu ausgebildete Einstecköffnungen auf. Das Abweiserelement wird dabei zwischen die beiden Einzelteile eingeklemmt, wobei die Einsteckzapfen für die entsprechende Klemmwirkung sorgen. Auch können die Einsteckzapfen als in Längsrichtung durchgehend verlaufende Einsteckleiste ausgebildet sein.

Weitere Luftleitanordnungen für Kraftfahrzeuge sind beispielsweise aus der NL 7 811 769 A oder aus der US 1 877 065 A bekannt.

Das Einklemmen eines typischerweise als flexibles Netz ausgestalteten Abweiserelements zwischen Einsteckzapfen und Einstecköffnungen führt jedoch unweigerlich zu einer Faltenbildung im Bereich der Einsteckzapfen. Eine in Längsrichtung durchgehend verlaufende Einsteckleiste würde sich hingegen in montagetechnischer Hinsicht als nachteilig erweisen, da die Leiste über ihre gesamte Längsrichtung wohl mit einem hierzu komplementär ausgestalteten Einsteckprofil zu verbinden wäre. Es dürfte sich als überaus schwierig erweisen, das flexible Abweiserelement faltenfrei zwischen den beiden Einzelteilen zu klemmen.

Sind insbesondere nur einzelne, etwa in Längsrichtung der Einzelteile voneinander beabstandete Einstecköffnungen und hierzu komplementäre Einsteckzapfen vorgesehen, so kann es in der Praxis vorkommen, dass das Abweiserelement nur im Bereich der miteinander in Eingriff stehenden Einsteckzapfen und Einstecköffnungen effektiv gehalten und fixiert ist, in Bereichen zwischen benachbarten Einsteckzapfen und Einstecköffnungen jedoch nur eine vergleichsweise geringe Klemmwirkung erfährt, was unter Umständen zu einer unerwünschten Falten- oder Wellenbildung des Abweiserelements, insbesondere im Langzeitbetrieb des Windabweisers führen kann.

In der Praxis werden flexible Abweiserelemente daher typischerweise randseitig umspritzt.

Die zunehmende Diversifizität im Kraftfahrzeugbau macht die Ausgestaltung unterschiedlich dimensionierter Windabweiser, insbesondere auch für Kleinserien, erforderlich. Ein überwiegend auf Spritzguss basierendes Fertigungsverfahren für Windabweiser, beispielsweise lediglich zum randseitigen Umspritzen des Abweiserelements oder Netzes, erweist sich produktionstechnisch, insbesondere im Hinblick auf die vergleichsweise hohen Anschaffungs- und Investitionskosten von Spritzgusswerkzeugen als nachteilig.

Zur Kostenminimierung ist es ferner erstrebenswert, einzelne Komponenten von Windabweisern an unterschiedlichen Standorten zu fertigen und den fertigen oder vorkonfektionierten Windabweiser mit möglichst geringen Transportkosten und bei möglichst geringem Transportvolumen zum Produktionsort des betreffenden Kraftfahrzeugs zu transportieren.

Insoweit liegt der vorliegenden Erfindung die Aufgabe zugrunde, ein verbessertes Anbindungskonzept für die Befestigung eines Abweiserelements an einem Windabweiser bereitzustellen, welches nicht nur eine kostengünstige und effiziente Fertigung, sondern auch eine möglichst universelle Anpassung an unterschiedliche geforderte Geometrien und Größen von Windabweisern ermöglicht. Die Erfindung soll ferner dazu beitragen, Herstellungs- und Investitionskosten für die Windabweiserproduktion als auch für den Transport von Windabweisern oder Windabweiserkomponenten merklich zu senken.

### Erfindung und vorteilhafte Ausgestaltungen

Diese Aufgabe wird mit einem Abweiserelement gemäß dem unabhängigen Patentanspruch 1, einem Windabweiser gemäß Patentanspruch 8, einem Kraftfahrzeug nach Anspruch 11 sowie mit einem Verfahren zur Herstellung eines Abweiserelements, mithin eines Windabweisers, gemäß Patentanspruch 12 gelöst. Vorteilhafte Ausgestaltungen sind dabei jeweils Gegenstand abhängiger Patentansprüche.

In einem ersten Aspekt betrifft die Erfindung ein Abweiserelement für einen Windabweiser. Das Abweiserelement weist ein flexibles Flächengebilde, typischerweise in Form eines luftdurchlässigen Netzes oder Gewirkes auf, welches Abweiserelement mittels eines Ausstellelements des Windabweisers in eine gegenüber einer Grundstellung angehobene oder aufgespannte Gebrauchsstellung überführbar ist. Das Abweiserelement weist zur Anbindung, beispielsweise an das Ausstellelement, entlang zumindest eines oberen Seitenrands eine Befestigungseinrichtung zur Befestigung am Ausstellelement auf.

Alternativ oder ergänzend kann das Abweiserelement entlang eines unteren Seitenrands des Flächengebildes eine Befestigungseinrichtung zur Befestigung an einem Basiselement des Windabweisers oder alternativ zur Befestigung an der Kraftfahrzeugkarosserie, typischerweise im Bereich Dachaussparung aufweisen. Die am Flächengebilde angeordnete Befestigungseinrichtung weist zumindest eine erste Klemmleiste und zumindest eine zweite Klemmleiste auf. Die erste und die zweite Klemmleiste sind mittels miteinander korrespondierender und das Flächengebilde durchsetzender Verbindungselemente miteinander verbindbar. Komplementär oder korrespondierend miteinander ausgestaltete Verbindungselemente erster und zweiter Klemmleiste, sind unter einem Einklemmen des Flächengebildes zwischen der ersten und der zweiten Klemmleiste miteinander verbindbar.

Indem zumindest eines der Verbindungselemente das Flächengebilde durchsetzt, erfährt das Flächengebilde insbesondere im Bereich der Verbindungselemente gerade keine Klemmwirkung. Das Flächengebilde wird vielmehr zwischen den im Wesentlichen ebenen und einander zugewandten Innenseiten der Klemmleisten eingeklemmt. Das Flächengebilde erfährt somit eine überaus homogene Flächenpressung zwischen erster und zweiter Klemmleiste, sodass es weitaus weniger zu einer Faltenbildung neigt als dies mit bekannten Befestigungseinrichtungen nach dem Stand der Technik der Fall ist.

Die Verbindungselemente der Klemmleisten sind typischerweise integrale Bestandteile der Klemmleisten, sodass für das wechselseitige Verbinden erster und zweiter Klemmleisten keine gesonderte Handhabung der hierfür vorgesehenen Verbindungselemente erforderlich ist. Es ist insbesondere vorgesehen, dass nur ein Teil der miteinander in Eingriff gelangenden Verbindungselemente von erster und zweiter Klemmleiste das Flächengebilde durchsetzen. Jene Verbindungselemente können beispielsweise als Vorsprünge oder als Zapfen an einer Innenseite der betreffenden Klemmleiste ausgestaltet sein. Ein das Flächengebilde durchsetzendes Verbindungselement kann alsdann auf der gegenüberliegenden Seite des Flächengebildes mit einem hiermit korrespondierenden oder komplementär ausgestalteten Verbindungselement der jeweils anderen Klemmleiste in Eingriff gelangen und hierdurch die erste und die zweite Klemmleiste fest aneinanderdrücken.

Ferner ist vorgesehen, dass an zumindest einer Außenseite zumindest einer der Klemmleisten ein Befestigungselement angeordnet ist, mittels welchem das Abweiserelement mit zumindest einem von Ausstellelement, Basiselement oder mit einer Kraftfahrzeugkarosserie verbindbar ist. Es ist denkbar, dass beide Klemmleisten an ihren voneinander abgewandten Außenseiten jeweils mit Befestigungselementen versehen sind. Zur Verbindung mit dem Ausstellelement, dem Basiselement oder wahlweise mit der Kraftfahrzeugkarosserie sind am Ausstellelement, am Basiselement oder an der Kraftfahrzeugkarosserie mit dem Befestigungselement korrespondierende Gegenbefestigungselemente oder dementsprechende Befestigungsstrukturen vorgesehen.

Das an zumindest einer Klemmleiste vorgesehene Befestigungselement ist zur Bildung einer formschlüssigen Verbindung von Klemmleiste mit einem von Ausstellelement, Basiselement oder Kraftfahrzeugkarosserie vorgesehen. Die mittels des zumindest einen Befestigungselements erzielbare formschlüssige Verbindung der Klemmleiste mit einem von Ausstellelement oder Basiselement, ermöglicht eine separate Vorfertigung des Abweiserelements unabhängig vom Ausstellelement oder Basiselement. Erst im Zuge einer Windabweiser-Endmontage oder Kraftfahrzeug-Endmontage kann eine Verbindung der Klemmleisten und damit des Abweiserelements mit dem Ausstellelement, dem Basiselement oder mit der Kraftfahrzeugkarosserie erfolgen. Transport- und Logistikkosten können auf diese Art und Weise deutlich reduziert werden, wenn nämlich das Flächengebilde separat von den Ausstellelementen und/oder Basiselementen des Windabweisers verpackt und transportiert wird.

Das an der Außenseite zumindest einer der Klemmleisten vorgesehene Befestigungselement weist ferner ein Rast- oder Clipselement auf, welches formschlüssig mit zumindest einem von Ausstellelement, Basiselement oder mit einer Kraftfahrzeugkarosserie verbindbar ist. Auch hierbei ist vorgesehen, dass das Rast- oder Clipselement unlösbar mit dem betreffenden Ausstellelement, dem Basiselement oder mit der Kraftfahrzeugkarosserie verbindbar ist. Ein Loslösen des Rast- oder Clipselements vom Ausstellelement, dem Basiselement oder von der Kraftfahrzeugkarosserie ist normalerweise nicht vorgesehen.

Das Rast- oder Clipselement kann dementsprechend robust und massiv ausgestaltet werden und muss keine Lösemittel oder Lösestrukturen aufweisen. Es kann von daher lediglich durch eine Materialaufdickung an der Außenseite zumindest einer der Klemmleisten besonders kostengünstig verwirklicht werden.

Nach einer Weiterbildung weist das Flächengebilde entlang seines Seitenrands eine Anordnung von Durchgangsöffnungen auf, welche hinsichtlich ihrer Form und Position mit der Form und Position der Verbindungselemente korrespondieren. Durch Vorsehen mehrerer Durchgangsöffnungen entlang des Seitenrands des Flächengebildes, das heißt in einem Seitenrandbereich des Flächengebildes, weist dieses eine Art Verbindungsschablone auf, mittels welcher das Flächengebilde bereits an lediglich einer der Klemmleisten vorfixierbar ist.

Mittels der Durchgangsöffnungen und der hiervon gebildeten Verbindungsschablone kann das Flächengebilde bereits an derjenigen Klemmleiste fixiert werden, welche zumindest zwei das Flächengebilde durchsetzende Verbindungselemente aufweist. Dies ist in montagetechnischer Hinsicht von besonderem Vorteil. Eine entsprechende Klemmleiste kann beispielsweise auf einer Montageplattform oder einem Montagetisch bereitgestellt werden. Das Flächengebilde mit seinen hierin vorgesehenen Durchgangsöffnungen kann mittels der Durchgangsöffnungen bereits an den betreffenden Verbindungselementen der Klemmleiste angeordnet werden, bevor die zweite Klemmleiste auf die Anordnung von erster Klemmleiste und Flächengebilde aufgelegt und schließlich das Flächengebilde einklemmend mit der ersten Klemmleiste verbunden werden kann.

Mittels mehrerer Verbindungselemente und hierzu korrespondierender Durchgangsöffnungen im Flächengebilde, kann ferner eine hohe Montagepräzision und Montagesicherheit bereitgestellt werden. Zum einen kann durch eine passgenaue Ausgestaltung von Durchgangsöffnungen und Verbindungselementen eine präzise wechselseitige Anordnung von Flächengebilde und betreffender Klemmleiste bereitgestellt werden. Zum anderen kann durch die konkrete geometrische Form von Verbindungselementen und Durchgangsöffnungen als auch durch die relative Position von Verbindungselementen und Durchgangsöffnungen jeweils zueinander eine wechselseitige Befestigung und Anordnung von Klemmleisten und Flächengebilden in lediglich einer einzigen Konfiguration oder Ausrichtung ermöglicht werden. Eine falsche, beispielsweise eine gedrehte Anordnung erster und zweiter Klemmleiste zueinander oder im Hinblick auf das Flächengebilde, kann auf diese Art und Weise unterbunden werden.

Insbesondere kann aber durch Vorsehen von Durchgangsöffnungen im Flächengebilde im Bereich der Verbindungselemente erreicht werden, dass die Bildung der Verbindung der beiden Klemmleisten untereinander kaum oder keinerlei Auswirkungen auf eine etwaige Falten- oder Wellenbildung auf das Flächengebilde hat und dass eine Klemmung des Flächengebildes zwischen den Klemmleisten ausschließlich außerhalb der miteinander in Eingriff stehenden Verbindungselemente erster und zweiter Klemmleiste erfolgt. Insbesondere ist vorgesehen, dass eine über die Fläche bzw. über den Seitenrand des Flächengebildes möglichst homogene Flächenpressung oder Flächenklemmung des betreffenden Seitenrands zwischen erster und zweiter Klemmleiste erfolgt.

Nach einer Weiterbildung ist an zumindest einer dem Flächengebilde zugewandten Innenseite zumindest einer von erster und zweiter Klemmleiste eine mit dem Flächengebilde in Klemmstellung gelangende Fixierstruktur vorgesehen. Die Fixierstruktur kann insbesondere zumindest geringfügig von der im Wesentlichen eben ausgestalteten Innenseite von erster und/oder zweiter Klemmleiste hervorstehen.

Mittels der Fixierstruktur ist eine Haft- oder Gleitreibung zwischen dem Flächengebilde und der betreffenden Klemmleiste auf ein solches Maß anhebbar, dass ein Verrutschen des Flächengebildes relativ zur Fixierstruktur effektiv verhindert wird. Die Fixierstruktur kann beabstandet zu den Verbindungselementen an der Innenseite der Klemmleisten angeordnet sein. Sie kann sich insbesondere im Zwischenraum zwischen in Längs- und/oder Querrichtung der Klemmleiste voneinander beabstandeten Verbindungselementen befinden. Es ist insbesondere denkbar, dass ein Zwischenraum in Längs- und/oder Querrichtung zwischen benachbarten Verbindungselementen an der Innenseite der Klemmleiste zumindest abschnittsweise oder sogar weitgehend vollständig mit einer Fixierstruktur versehen ist.

Die konkrete Ausgestaltung der Fixierstruktur ist insbesondere an die mechanischen Eigenschaften des Flächengebildes angepasst. Nach einer weiteren Ausgestaltung kann die Fixierstruktur eine sich dem Seitenrand entlang erstreckende Kamm- oder Zahnleiste aufweisen, die eine regelmäßige Anordnung von Zahn- oder Kammelementen, mithin einzelnen vergleichsweise kleinen zackenartigen oder hakenartigen Vorsprüngen aufweist, die über eine vergleichsweise große Fläche am Flächengebilde anliegen und so ein Verrutschen des Flächengebildes in Bereichen zwischen benachbarten Verbindungselementen weitreichend verhindern.

Mittels derartiger Fixierstrukturen ist eine besonders stabile, dauerhaltbare und formschöne, insbesondere faltenfreie Anbindung des Flächengebildes an den Klemmleisten zu verwirklichen. Hierfür ist eine vergleichsweise geringe Anzahl von miteinander in Eingriff gelangenden Verbindungselementen an erster und zweiter Klemmleiste bereits ausreichend. Das Vorsehen möglichst weniger Verbindungselemente ist in herstellungs- und montagetechnischer Hinsicht von besonderem Vorteil.

Nach einer weiteren Ausgestaltung ist vorgesehen, dass die Verbindungselemente an den einander zugewandten Innenseiten von erster und zweiter Klemmleiste in Geometrie und Position miteinander korrespondierende Zapfen und Aufnahmen aufweisen. So können beispielsweise an der Innenseite der ersten Klemmleiste mehrere in Längsrichtung oder auch in Querrichtung der Klemmleiste voneinander beabstandete Zapfen angeordnet sein, die in hiermit korrespondierende oder komplementär ausgestaltete Aufnahmen an der Innenseite der zweiten Klemmleiste einsteckbar sind. Die Zapfen und Aufnahmen können miteinander korrespondierende Rastelemente oder Raststrukturen aufweisen, die eine unlösbare Fixierung der Klemmleisten zueinander als auch am flexiblen Flächengebilde ermöglichen. Eine nicht lösbare Verbindung meint hierbei eine Verbindung, die ausschließlich durch Zerstörung einer Verbindungskomponente lösbar ist.

In Weiterbildung des Abweiserelements ist ferner vorgesehen, dass zumindest an einer Innenseite einer Klemmleiste oder dass an zumindest den Innenseiten der Klemmleisten zumindest zwei unterschiedlich ausgestaltete Verbindungselemente vorgesehen sind, die ausschließlich in einer von mehreren Ausrichtungen erster und zweiter Klemmleisten zueinander mit hiermit korrespondierenden Verbindungselementen verbindbar sind. Dies kann beispielsweise durch unterschiedlich ausgestaltete Paare von Verbindungselementen realisiert werden, die an hierfür vorgesehenen Positionen, typischerweise außermittigen Positionen an den Klemmleisten angeordnet sind. Sollte eine der beiden Klemmleisten etwa in einer verdrehten Konfiguration mit der anderen Klemmleiste versehentlich verbunden werden, so passen die entsprechenden Verbindungselemente nicht aufeinander und eine Verbindung der beiden Klemmleisten wird hierdurch verhindert.

Des Weiteren oder alternativ hierzu ist denkbar, die Positionen miteinander korrespondierender oder komplementär ausgestalteter Verbindungselemente derart zu wählen, dass die erste und die zweite Klemmleiste ausschließlich in einer vorgegebenen Orientierung relativ zueinander miteinander verbindbar sind. Dergleichen kann auch für die Anordnung des flexiblen Flächengebildes an einer bzw. an beiden Klemmleisten vorgesehen sein. Insbesondere durch eine asymmetrische oder unregelmäßige Anordnung von Verbindungselementen und hiermit komplementär ausgestalteten Durchgangsöffnungen am Flächengebilde kann erreicht werden, dass die Klemmleiste bzw. die Klemmleisten ausschließlich in einer hierfür vorgesehenen Ausrichtung und Orientierung miteinander als auch mit dem Flächengebilde verbindbar sind. Die Gefahr von Fehlmontagen kann auf diese Art und Weise verringert werden. Ein Schulungsaufwand für das Fertigungspersonal kann hierdurch in vorteilhafter Weise reduziert werden.

Nach einer weiteren Ausgestaltung weisen die erste und die zweite Klemmleiste jeweils zumindest ein erstes und ein zweites Bogenstück auf, welche Bogenstücke, bezogen auf ihre Bogenkrümmung in Radialrichtung aneinander anliegend miteinander verbunden sind. Die Ausgestaltung einer zumindest bereichsweise gebogenen Klemmleiste ermöglicht eine Flächenklemmung oder Flächenpressung des Flächengebildes auch in einem Krümmungsbereich des Ausstellelements des Windabweisers.

Mittels bereichsweise gekrümmter Klemmleisten kann das flexible Flächengebilde auch in einem Krümmungsabschnitt von Basiselement oder Ausstellelement faltenfrei am Ausstellelement oder an der Basis bzw. an der Karosserie des Kraftfahrzeugs befestigt werden. Windabweiser weisen typischerweise ein sich in Fahrzeugquerrichtung (y) erstreckendes Mittelstück auf, welches an seinen außenliegenden Enden, etwa über einen 90°-Bogen in seitliche Wangenabschnitte übergeht. Indem die erste Klemmleiste zumindest ein erstes Bogenstück und indem die zweite Klemmleiste zumindest ein zweites Bogenstück aufweist, welches überdeckend zum ersten Bogenstück zu liegen kommt, kann das Flächengebilde auch in jenem Bogenabschnitt sicher und faltenfrei fixiert werden. Es ist hierbei insbesondere denkbar, dass die erste und die zweite Klemmleiste jeweils an gegenüberliegenden Endabschnitten ein erstes und ein zweites Bogenstück aufweisen, sodass die erste und die zweite Klemmleiste im Wesentlichen der Kontur des Ausstellelements und/oder des Basiselements nachempfunden sind.

Insoweit kann nach einer Weiterbildung zumindest eine von erster und zweiter Klemmleiste einstückig ausgestaltet sein und sich über den gesamten oberen und/oder über den gesamten unteren Seitenrand des Flächengebildes erstrecken. Es ist ferner denkbar, dass erste und zweite Klemmleiste jeweils einstückig ausgestaltet sind, und dass sich erste und zweite Klemmleiste dementsprechend entlang des gesamten oberen und entlang des gesamten unteren Seitenrands des Flächengebildes erstrecken. Erste und zweite Klemmleisten können insbesondere als Spritzgussbauteile ausgestaltet sein. Sie sind bevorzugt vergleichsweise flach und eben ausgebildet und folgen der Kontur des oberen und des unteren Seitenrandes des Flächengebildes. Die Dicke der Anordnung von erster und zweiter Klemmleiste mit dazwischen eingeklemmtem Flächengebilde beträgt typischerweise weniger als 1 cm, weniger als 8 mm, weniger als 6 mm oder weniger als 5 mm.

Insbesondere ist denkbar, dass die Befestigungseinrichtung mit ihren ersten und zweiten Klemmleisten als eine Art randseitiger Keder für das Flächengebilde fungiert, welcher Keder dem Flächengebilde eine geforderte mechanische Steifigkeit im Randbereich verleihen und eine separate Handhabung des Flächengebildes, etwa zu Transport- und Montagezwecken ermöglichen. Die Handhabung des an und für sich flexiblen Flächengebildes kann mittels der Anbindung erster und zweiter Klemmleiste im Vergleich zu einer Ausgestaltung ohne Befestigungseinrichtung deutlich vereinfacht werden.

Nach einer weiteren alternativen Ausgestaltung ist zumindest eine von erster und zweiter Klemmleiste mehrteilig ausgestaltet. Eine mehrteilige Klemmleiste weist zumindest zwei gebogene Wangenstücke und zumindest ein dazwischenliegendes, im Wesentlichen geradliniges Mittelstück auf. Es ist insbesondere denkbar, eine der Klemmleisten einstückig auszugestalten und die andere Klemmleiste mehrteilig auszubilden. Die einteilige Klemmleiste, welche sich über den gesamten oberen oder unteren Seitenrand des Flächengebildes erstreckt, kann hierbei als eine Art Montageleiste fungieren, auf welche zunächst das flexible Flächengebilde gelegt werden kann, und an welcher sodann die einzelnen Segmente der mehrteiligen Klemmleiste anordenbar sind.

Erste und/oder zweite Klemmleiste können insbesondere als Spritzgussbauteile gefertigt sein. Es ist zudem denkbar, dass beide, erste und zweite Klemmleiste jeweils mehrteilig ausgestaltet sind, und dass jede von erster und zweiter Klemmleiste zwei gebogene Wangenstücke und jeweils ein dazwischenliegendes Mittelstück aufweisen, wobei die aneinander zur Anlage gelangenden Wangenstücke erster und zweiter Klemmleisten als auch die jeweiligen Mittelstücke erster und zweiter Klemmleisten jeweils formschlüssig und/oder kraftschlüssig miteinander verbindbar sind.

Mittels einer Segmentierung der Klemmleiste ist es möglich, unterschiedlich lange und unterschiedlich dimensionierte Klemmleisten auf der Basis einiger weniger genormter Teilstücke auszubilden. Es ist insbesondere denkbar, in Fahrzeugquerrichtung (y) unterschiedlich breite bzw. unterschiedlich lange Abweiserelemente auf der Basis immer gleichbleibender Wangenstücke, aber unterschiedlich langer Mittelstücke oder mittels mehrerer Mittelstücke zu realisieren. Es ist denkbar, genormte Standardgrößen für die randseitigen Wangenstücke, als auch für dazwischenliegende Mittelstücke vorzusehen. Durch Austausch eines vergleichsweisen kurzen Mittelstücks durch ein längeres Mittelstück oder durch Vorsehen mehrerer aneinander gereihter Mittelstücke kann die Gesamtlänge bzw. die Erstreckung des Abweiserelements in Fahrzeugquerrichtung (y) nahezu beliebig angepasst werden, ohne dass hierfür gesonderte Spritzgusswerkzeuge angeschafft oder bereitgestellt werden müssen.

Nach einer weiteren Ausgestaltung ist das Flächengebilde ferner abschnittsweise mit einer Verstärkungsstruktur versehen, welche eine erste Verstärkungsleiste und eine zweite Verstärkungsleiste aufweist. Die Verstärkungsleisten sind dabei mittels miteinander korrespondierender und das Flächengebilde zumindest teilweise durchsetzender Verbindungselemente miteinander verbunden. Die Verstärkungsleisten klemmen dabei einen Abschnitt des Flächengebildes zwischen sich ein. Die wechselseitige Befestigung der Verstärkungsleisten am flexiblen Flächengebilde kann weitreichend identisch oder ähnlich zur Anbindung der Klemmleisten am Flächengebilde vorgesehen und dementsprechend ausgestaltet sein.

Die Verstärkungsstruktur kann insbesondere im Bogen- oder Krümmungsbereich des Flächengebildes vorgesehen sein. Die Verstärkungsstruktur kann beispielsweise parallel zu einem Bogenstück erster und/oder zweiter Klemmleiste, jedoch in einem vorgegebenen Abstand des Flächengebildes verlaufen. Ferner ist denkbar, einen linken oder rechten Seitenrand des flexiblen Flächengebildes, welcher sich zwischen oberem und unterem Seitenrand des Flächengebildes erstreckt, zumindest abschnittsweise mit einer derartigen Verstärkungsstruktur zu versehen.

Die Verstärkungsstruktur weist eine geringere Elastizität oder Flexibilität als das Flächengebilde, aber eine deutlich höhere Flexibilität oder Elastizität als die Klemmleisten auf. Es ist insbesondere vorgesehen, dass die Verstärkungsleisten aus einem anderen Material als die Klemmleisten gefertigt sind. Während für die Klemmleisten typischerweise einen thermoplastischen Kunststoff, wie beispielsweise Polypropylen (PP), Polyamid (PA) oder Polybutylenterephthalat (PBT) oder hieraus gebildete Stoffgemische, ggf. mit einem Faseranteil von 0 bis 50 % vorgesehen sein kann, sind die Verstärkungsleisten typischerweise aus einem thermoplastischen Elastomer (TPE) gefertigt. Als Materialien für die Verstärkungsleisten kommen insbesondere auch Kautschuk, Gummi, Silikon oder dergleichen Materialgemisch infrage. Die Verstärkungsleisten weisen typischerweise eine Shorehärte zwischen 50 und 80 auf.

Nach einer weiteren Ausgestaltung ist die von ersten und zweiten Verstärkungsleisten gebildete Verstärkungsstruktur flexibel deformierbar und entgegen einer Vorspannkraft von einer zusammengefalteten Grundstellung in eine auseinandergefaltete, das Flächengebilde aufspannende Gebrauchsstellung deformierbar oder faltbar. Indem die Verstärkungsstruktur eine aufstellende oder entfaltende Vorspannung aufweist, kann sie nicht nur die Bewegung des Ausstellelements unterstützen, sondern vielmehr auch ein geordnetes und definiertes Zusammen- und Auseinanderfalten des Flächengebildes während einer Ausstell- und Einklappbewegung des Ausstellelements unterstützen bzw. vorgeben.

Indem die Verstärkungsstruktur gleichermaßen wie auch die Befestigungseinrichtung durch Vorsehen beidseits des Flächengebildetes angeordneter und unmittelbar miteinander in Eingriff gelangender Verstärkungsleisten mit dem Flächengebilde verbunden ist, wird auch für das Vorsehen der Verstärkungsstruktur ein bislang üblicher Spritzgussprozess überflüssig. Herstellungs- und Investitionskosten für die Herstellung können auf diese Art und Weise weiter gesenkt werden.

Nach einer weiteren Ausgestaltung umschließt die Verstärkungsstruktur einen linken und/oder rechten Seitenrand des Flächengebildes. Insbesondere durch die linke und rechte Seitenrandumschließung mittels der Verstärkungsstruktur kann nicht nur einem Ausfransen des Flächengebildes entgegengewirkt werden. Vielmehr ist über die Seitenrandanbindung der Verstärkungsstruktur ein gefordertes Faltverhalten des Flächengebildes induzierbar.

Nach einem weiteren Aspekt betrifft die Erfindung ferner einen Windabweiser zur Anordnung an einer Dachöffnung eines Kraftfahrzeugs. Der Windabweiser weist zumindest ein Ausstellelement und optional ein Basiselement auf. Das Ausstellelement ist in einer Endmontagestellung an der Karosserie eines Kraftfahrzeugs zwischen einer Grundstellung und einer gegenüber der Grundstellung angehobenen und aufgespannten Gebrauchsstellung beweglich an einer Karosserie des Kraftfahrzeugs, insbesondere an einer Dachstruktur des Kraftfahrzeugs anordenbar.

Der Windabweiser weist neben dem beweglich an der Kraftfahrzeugkarosserie anbindbaren Ausstellelement zumindest ein zuvor beschriebenes Abweiserelement auf, welches mittels seiner Befestigungseinrichtung an zumindest einem von Ausstellelement, Basiselement oder an der Kraftfahrzeugkarosserie anordenbar bzw. hieran befestigbar ist. Sofern der Windabweiser mit einem Basiselement versehen ist, kann das Abweiserelement mittels seiner Befestigungseinrichtung am Basiselement angeordnet sein. Ist der Windabweiser basiselementfrei ausgestaltet, so ist vorgesehen, dass das Abweiserelement mittels seiner Befestigungseinrichtung direkt an der Kraftfahrzeugkarosserie befestigt wird. Es ist grundsätzlich denkbar, dass lediglich einer von oberem und unterem Seitenrand des Flächengebildes mit der erfindungsgemäßen Befestigungseinrichtung versehen ist. Von Vorteil sind jedoch beide, oberer und unterer Seitenrand, jeweils mit der hier beschriebenen, beispielsweise anclipsbaren und kederartig ausgestalteten Befestigungseinrichtung versehen.

Nach einer Weiterbildung des Windabweisers weist zumindest eines von Ausstellelement und Basiselement eine Einstecköffnung zur Aufnahme der Befestigungseinrichtung des Abweiserelements auf. In oder an der Aufnahme von Ausstellelement und Basiselement sind Gegenbefestigungselemente oder Gegenbefestigungsstrukturen vorgesehen, die mit den an der Außenseite zumindest einer Klemmleiste vorgesehenen Befestigungselementen der Befestigungseinrichtung des Abweiserelements zusammenwirken.

Es ist insbesondere denkbar, dass das Abweiserelement mittels seiner randseitigen Befestigungseinrichtung lediglich in eine hierfür vorgesehene Einstecköffnung am Ausstellelement oder am Basiselement einführbar und mittels geeigneter komplementär zueinander ausgestalteten Befestigungs- und Gegenbefestigungselementen rastend oder formschlüssig miteinander verbindbar sind. Die Ausbildung von Rast-, Klemm-, Spreiz- oder Keilelementen für das an der Außenseite der Klemmleiste vorgesehene Befestigungselement ermöglicht insbesondere eine werkzeugfreie Endmontage und Befestigung des flexiblen Flächengebildes am Ausstellelement oder am Basiselement, ggf. auch gleichermaßen an der Kraftfahrzeugkarosserie.

Nach einer weiteren Ausgestaltung ist an zumindest einem von Ausstellelement und Basiselement ein die Einstecköffnung zumindest bereichsweise verschließendes Verstärkungselement angeordnet. Das Ausstellelement und das Basiselement können, für sich betrachtet, jeweils als Kunststoffspritzgusskomponente ausgebildet sein. Durch Vorsehen eines Verstärkungselements, beispielsweise einem metallischen Verstärkungselement oder einem aus Kunststoff gefertigten Verstärkungselement kann das Ausstellelement bzw. das Basiselement eine strukturelle Verstärkung erfahren. Es ist insbesondere denkbar, auch das Verstärkungselement werkzeugfrei mit dem Ausstellelement oder dem Basiselement zu verbinden. Das Verstärkungselement kann ferner als ein Metall-Kunststoffverbundbauteil ausgestaltet sein.

Insoweit können am Verstärkungselement und am Ausstellelement oder Basiselement miteinander korrespondierende bzw. komplementär zueinander ausgestaltete Befestigungs- oder Verbindungselemente gesehen sein. Es ist ferner denkbar, dass das Verstärkungselement die Einstecköffnung am Ausstellelement oder am Basiselement zumindest bereichsweise verschließt, in welcher Einstecköffnung die Befestigungseinrichtung des Flächengebildes angeordnet ist. Mittels der zusätzlichen Anbindung des Verstärkungselements, beispielsweise am Ausstellelement, kann die wechselseitige Verbindung von Flächengebilde und Ausstellelement verstärkt und verbessert werden.

In einem weiteren Aspekt betrifft die Erfindung schließlich ein Kraftfahrzeug, welches mit einem zuvor beschriebenen Windabweiser ausgestaltet ist.

Des Weiteren ist ein erfindungsgemäßes Verfahren zur Herstellung eines Abweiserelements, mithin eines Windabweisers, wie zuvor beschrieben, vorgesehen. Das Verfahren umfasst hierbei die Schritte des Bereitstellens einer ersten und einer zweiten Klemmleiste, welche miteinander korrespondierende bzw. komplementäre Verbindungselemente aufweisen, und wobei an zumindest einer Außenseite zumindest einer der Klemmleisten ein Befestigungselement angeordnet ist, mittels welchem das Abweiserelement mit zumindest einem Ausstellelement oder einem Basiselement eines Windabweisers oder mit einer Kraftfahrzeugkarosserie verbindbar ist und wobei das Befestigungselement ein Rast- oder Clipselement aufweist, welches formschlüssig mit zumindest einem von Ausstellelement, Basiselement oder mit der Kraftfahrzeugkarosserie verbindbar ist. In einem weiteren Schritt wird ein Flächengebilde zugeschnitten, welches vorzugsweise mit Durchgangsöffnungen in einem Seitenrandbereich versehen wird. Das Flächengebilde wird alsdann zwischen der ersten und der zweiten Klemmleiste und mittels eines wechselseitigen Verbindens erster und zweiter Klemmleisten mittels der hieran vorgesehenen Verbindungselemente eingeklemmt, wobei zumindest einige der Verbindungselemente das Flächengebilde durchsetzen.

Typischerweise wird das Flächengebilde nicht nur randseitig zugeschnitten, sondern im gleichen Zug werden auch Durchgangsöffnungen im Seitenrandbereich in das Flächengebilde eingebracht. Der randseitige Zuschnitt als auch das Einbringen von Durchgangsöffnungen kann mittels ein- und desselben Bearbeitungswerkzeugs, etwa mittels einer Stanze oder mittels Laserschneiden, erfolgen. Die in das Flächengebilde eingebrachten Durchgangsöffnungen können gleichermaßen zur Positionierung an einer der beiden bereitgestellten Klemmleisten, insbesondere an deren Verbindungselementen, dienen. Die weitere Klemmleiste kann alsdann unter Ausbildung einer möglichst homogenen Flächenpressung oder Flächenklemmung des Seitenrandbereichs des Flächengebildes mit der ersten Klemmleiste verbunden werden.

Das Abweiserelement kann vollkommen unabhängig und separat vom Ausstellelement oder vom Basiselement des Windabweisers gefertigt werden. Insbesondere kann das mit den Klemmleisten und der hiervon gebildeten Befestigungseinrichtung versehene Flächengebilde in einem zusammengelegten und platzsparenden Zustand an einen anderen Ort zur Endmontage transportiert werden.

Nach einer Weiterbildung des Verfahrens ist ferner vorgesehen, dass zur Herstellung unterschiedlich dimensionierter Abweiserelemente unterschiedlich dimensionierte Klemmleisten bereitgestellt werden oder mehrere Klemmleistenstücke unterschiedlicher Größe und/oder unterschiedlicher Gestalt aus einer Auswahl an Klemmleistenstücken ausgewählt werden. Durch Bereitstellen einer Auswahl unterschiedlich gestalteter Klemmleistenstücke können unterschiedlich konfektionierte und in ihren Abmessungen unterschiedlich dimensionierte Flächengebilde mit vergleichsweise geringem Werkzeug- und Fertigungsaufwand in ihrem Randbereich mittels geeigneter Klemmleisten eingefasst und mittels der von den Klemmleisten jeweils gebildeten Befestigungseinrichtung in einem nachfolgenden Montageschritt mit anderweitig bereitgestellten Ausstellelementen und/oder Basiselementen von Windabweisern, bzw. direkt mit entsprechenden Karosserieabschnitten eines Kraftfahrzeugs verbunden werden.

Weitere Verfahrensschritte zur Herstellung des Abweiserelements ergeben sich zwangsläufig aus der Konfiguration und der Wechselwirkung der einzelnen Bestandteile des Abweiserelements und des Windabweisers. Insoweit gelten sämtliche zum Abweiserelement und zum Windabweiser beschriebenen Merkmale sowie hiermit erzielbare Wirkungen und Effekte auch gleichermaßen für das Verfahren zu ihrer Herstellung; und umgekehrt.

### Kurzbeschreibung der Figuren

Weitere Ziele, Merkmale sowie vorteilhafte Ausgestaltungen des Abweiserelements, des Windabweisers als auch des zugehörigen Herstellungsverfahrens werden in der nachfolgenden Beschreibung von Ausführungsbeispielen unter Bezugnahme auf die Zeichnungen erläutert. Hierbei zeigen:
- Fig. 1: eine perspektivische Darstellung eines Windabweisers,
- Fig. 2: eine schematische und vereinfachte Querschnittsdarstellung durch einen oberen Seitenrand eines Abweiserelements in Vormontagekonfiguration,
- Fig. 3: das Abweiserelement gemäß Fig. 2 mit einer daran befestigten, von zwei Klemmleisten gebildeten Befestigungseinrichtung,
- Fig. 4: eine schematische und perspektivische Darstellung einer Vormontagekonfiguration gemäß Fig. 2 und
- Fig. 5: eine der Fig. 3 entsprechende perspektivische Darstellung des Abweiserelements,
- Fig. 6: einen schematischen Querschnitt durch eine Anordnung von Abweiserelement und Windabweiser während einer Endmontage,
- Fig. 7: einen Querschnitt gemäß Fig. 6 nach einem Verbinden von Abweiserelement mit Ausstellelement und Basiselement,
- Fig. 8: eine Darstellung gemäß Fig. 7, jedoch mit einem am Ausstellelement angeordneten Verstärkungselement,
- Fig. 9: eine schematische Ansicht von oben auf einen seitlichen Bogenabschnitt des Abweiserelements in einer Vormontagekonfiguration,
- Fig. 10: eine weitere, ausschnittsweise Darstellung des Abweiserelements gemäß Fig. 9 mit miteinander verbundenen Klemmleisten,
- Fig. 11: eine schematische Darstellung der Anbindung einer Verstärkungsstruktur am linken Seitenrand des Flächengebildes in Vormontagestellung,
- Fig. 12: eine Darstellung des Seitenrandes gemäß Fig. 11, jedoch in Endmontagestellung,
- Fig. 13: eine Ausgestaltung eines vergleichsweise schmalen Abweiserelements mit einer in drei Segmente unterteilten Befestigungseinrichtungen,
- Fig. 14: eine im Vergleich zu Fig. 13 breitere Ausgestaltung des Abweiserelements und
- Fig. 15: eine alternative Ausgestaltung des Abweiserelements gemäß Fig. 14.

### Detaillierte Beschreibung

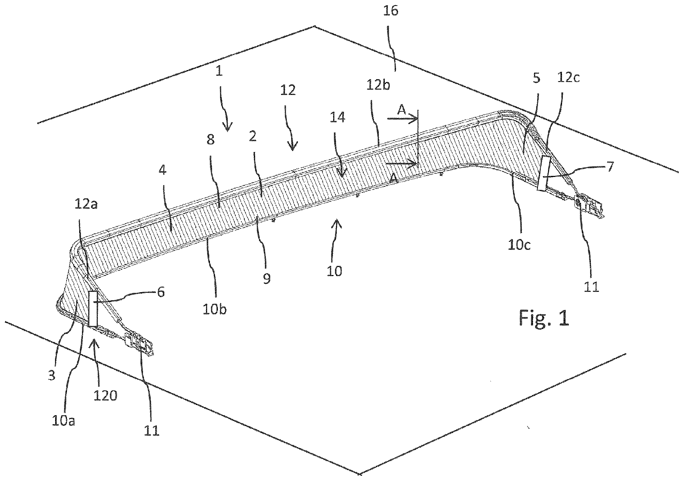

In Fig. 1 ist in perspektivischer Darstellung ein Windabweiser 1 zur Anordnung an einer Schiebedachöffnung einer Kraftfahrzeugkarosserie 16 dargestellt. Der Windabweiser 1 weist im vorliegenden Ausführungsbeispiel ein in etwa in der Ebene der Dachstruktur der Karosserie 16 zu liegen kommendes Basiselement 10 sowie ein schwenkbar hierzu gelagertes Ausstellelement 12 auf. Das Basiselement 10 als auch das Ausstellelement 12 weisen, von oben betrachtet, eine U-förmige Grundgeometrie auf, wobei sich die beiden äußeren Schenkel 10a, 10c in etwa in Fahrzeuglängsrichtung (x) erstrecken. Gleichermaßen sind die beiden äußeren Schenkel 12a, 12c des Ausstellelements 12, von oben betrachtet, in etwa überdeckend mit den Schenkeln 10a, 10c des Basiselements 10 angeordnet. Die freien Enden der Schenkel 10a, 12a bzw. 10c, 12c sind jeweils über ein Gelenk 11 schwenkbar miteinander verbunden.

Zwischen den gegenüberliegenden seitlichen Schenkeln 10a, 10c, 12a, 12c weisen sowohl das Basiselement 10 als auch das Ausstellelement 12 ein im Wesentlichen geradlinig ausgestaltetes Mittelstück 10b, 12b auf, welches sich in Endmontagekonfiguration am hier nicht explizit gezeigten Kraftfahrzeug, im Wesentlichen in Kraftfahrzeugquerrichtung (y), erstreckt.

Das Ausstellelement 12 ist typischerweise entgegen einer Rückstellkraft, beispielsweise entgegen einer Federkraft in eine Grundstellung überführbar, in welcher es nahezu vollständig am Basiselement 10 anliegt. Zwischen dem Basiselement 10 und dem Ausstellelement 12 befindet sich ein Abweiserelement 14, welches ein flexibles, typischerweise luftdurchlässiges Flächengebilde 2 mit einer randseitigen Befestigungseinrichtung 20 aufweist. Das Flächengebilde 2 ist insbesondere als flexibles Netz, etwa in Form eines Gewebes oder eines Gewirkes ausgestaltet.

Mittels des typischerweise federbeaufschlagten Ausstellelements 12 ist das Flächengebilde 2 in die in Fig. 1 gezeigte angehobene oder aufgespannte Gebrauchsstellung überführbar, in welcher es zumindest bereichsweise von der Silhouette des Kraftfahrzeugdachs hervorsteht und auf diese Art und Weise bei einem sich in Bewegung befindlichen Kraftfahrzeug eine gezielte Luftverwirbelung im Bereich des Schiebedachs bewirkt. Das Flächengebilde 2 weist einen oberen Seitenrand 8 auf, welcher mit dem Ausstellelement 12 verbunden ist. Das Flächengebilde 2 weist ferner einen unteren Seitenrand 9 auf, welcher mit dem Basiselement 10 verbunden ist. Seitliche Seitenränder, etwa ein in Fig. 1 links dargestellter linker Seitenrand 6 des Flächengebildes 2 als auch ein rechter Seitenrand 7 des Flächengebildes 2 kommen beabstandet zum Gelenk 11 zu liegen. Das Flächengebilde 2 ist in seiner Erstreckung zwischen den linken und rechten Seitenrändern 6, 7 einstückig ausgestaltet. Es weist ein etwa ebenes Mittelstück 4 auf, welches im Übergang zu den Schenkeln 12a, 12c, 10a, 10c von Ausstellelement 12 und Basiselement 10 in einen linken Wangenabschnitt 3 und in einen gegenüberliegenden rechten Wangenabschnitt 5 übergeht. Insbesondere im Bereich jener Wangenabschnitte 3, 5 ist es fertigungstechnisch recht schwierig, eine faltenfreie Anbindung des flexiblen Flächengebildes 2 am Ausstellelement 12 oder am Basiselement 10 zu verwirklichen.

Wenngleich in den Figuren nicht gezeigt, sind auch solche Ausgestaltungen des Windabweisers 1 denkbar und im Rahmen der Erfindung, welche basiselementfrei ausgestaltet sind. Bei derartigen Ausgestaltungen wird die Funktion des Basiselements 10, das heißt eine Halterung des unteren Seitenrands 9 des Flächengebildes 2 direkt von der Fahrzeugkarosserie 16 bereitgestellt. Der untere Seitenrand 9 des flexiblen Flächengebildes 2 wird dabei mittels einer sich entlang dem unteren Seitenrand 9 erstreckenden Befestigungseinrichtung 20 direkt mit der Karosserie 16 verbunden.

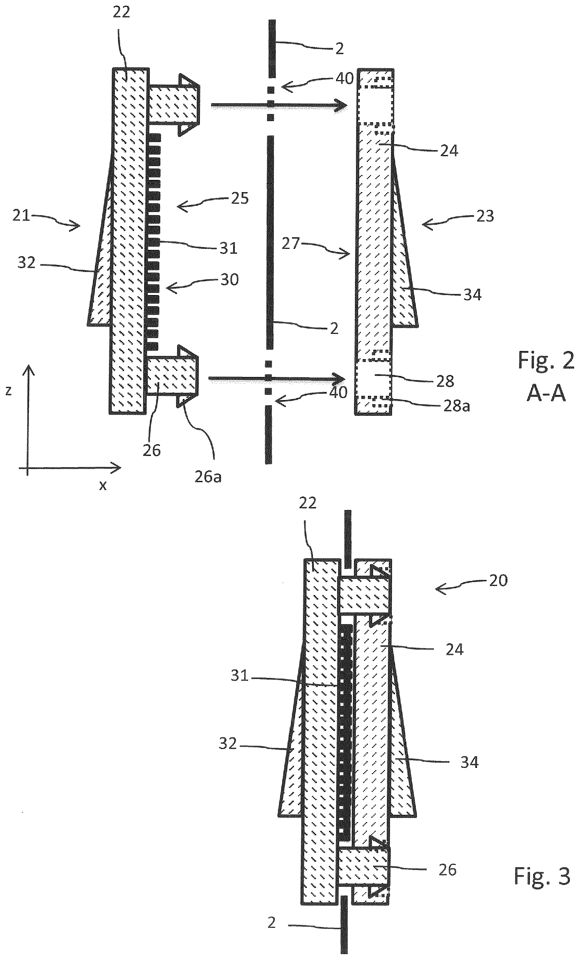

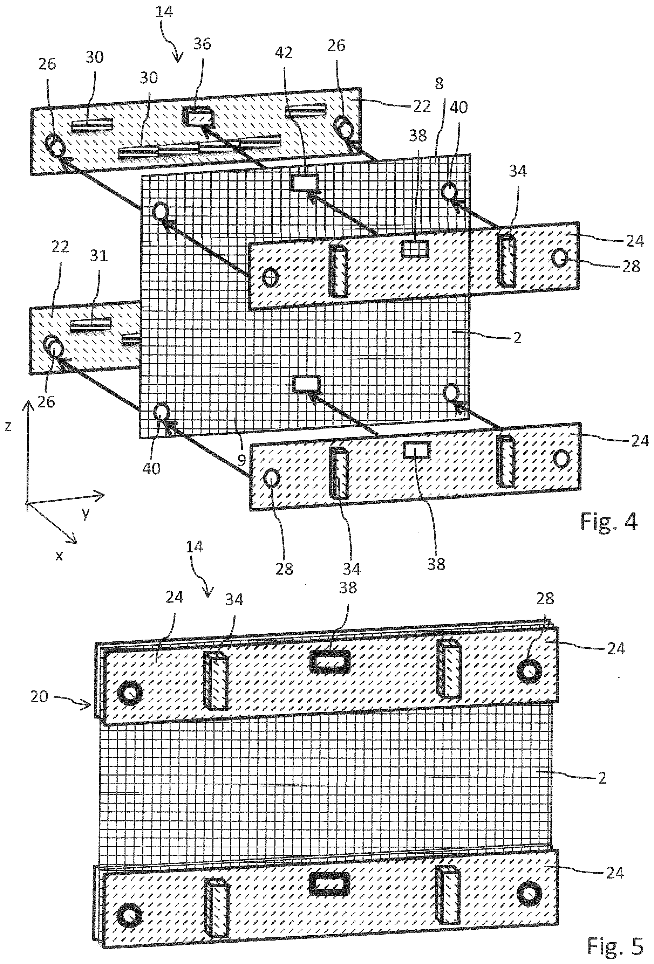

Zur Befestigung des Abweiserelements 14 als auch zur Steigerung seiner mechanischen Stabilität und zu seiner Strukturverstärkung wird das Abweiserelement 14 randseitig, das heißt zumindest entlang eines oberen Seitenrandes 8 oder entlang eines unteren Seitenrandes 9, wie in den Fig. 4 und 5 und im Detail in den Fig. 2 und 3 dargestellt, mit einer Befestigungseinrichtung 20 versehen. Die Befestigungseinrichtung 20 wird vorliegend von einer ersten Klemmleiste 22 und von einer zweiten Klemmleiste 24 gebildet. Die beiden Klemmleisten 22, 24 weisen miteinander korrespondierende bzw. komplementär zueinander ausgestaltete Verbindungselemente 26, 28 auf. Während in den Fig. 4 und 5 in Fahrzeughochrichtung (z) jeweils nur ein Verbindungselement 26 gezeigt ist, offenbart die etwas größere Darstellung gemäß den Fig. 2 und 3 eine Ausgestaltung mit zwei in Fahrzeughochrichtung (z) oder vertikal voneinander beabstandete Verbindungselemente 26, 28.

Mittels der Verbindungselementer 26, 28 sind die erste und die zweite Klemmleiste 22, 24 miteinander verbindbar, wie dies aus der Fügeposition gemäß Fig. 3 hervorgeht. Die Verbindungselemente 26, 28 sind an den einander zugewandten Innenseiten 25, 27 von erster und zweiter Klemmleiste 22, 24 vorgesehen. Die Verbindungselemente 26 der ersten Klemmleiste 22 sind vorliegend als Rastvorsprünge, insbesondere als Rast- oder allgemein als Verbindungszapfen ausgestaltet, die in entsprechend als Aufnahmen ausgestaltete Verbindungselemente 28 der zweiten Klemmleiste 24 einführbar oder einsetzbar sind.

Die Verbindungselemente 26, 28 weisen miteinander korrespondierende Rastelemente oder Raststrukturen 26a, 28a auf, die mit Erreichen einer in Fig. 3 gezeigten Klemm- oder Montagestellung rastend miteinander in Eingriff gelangen. Beispielsweise weist das als Zapfen ausgestaltete Verbindungselemente 26 nach außen aufspreizende Rastelemente oder Raststrukturen 26a auf, die in hierzu korrespondierenden, etwa als Hinterschneidung ausgestalteten Rastelementen oder Raststrukturen 28a des komplementär ausgestalteten Verbindungselements 28 unter Bildung einer formschlüssigen Verbindung erster und zweiter Klemmleisten 22, 24 zu liegen kommen.

In der in Fig. 3 gezeigten Montagestellung durchdringt zumindest eines der Verbindungselemente 26 das flexible Flächengebilde 2. Von Vorteil weist das Flächengebilde 2 eine oder mehrere an die Position und Geometrie der Verbindungselemente 26 angepasste Durchgangsöffnungen 40 auf. Auf diese Art und Weise erfährt das Flächengebilde 2 im Bereich der miteinander in Eingriff stehenden Verbindungselemente 26, 28 keinerlei Verformung. Einer Faltenbildung kann insoweit effektiv entgegengewirkt werden.

Des Weiteren kann durch Vorsehen mehrerer, etwa eine Verbindungsschablone bildender Durchgangsöffnungen 40, 42 im Randbereich des Flächengebildes 2, wie beispielsweise in Fig. 4 dargestellt, eine besonders einfache Vormontage der ersten Klemmleiste 22 mit dem Flächengebilde 2 bereitgestellt werden. So kann in montagetechnischer Hinsicht vorgesehen sein, das Flächengebilde 2 mit seinen vorkonfigurierten Durchgangsöffnungen 40, 42 derart auf die erste Klemmleiste 22 aufzulegen, dass die hervorstehenden Verbindungselemente 26, 36 die Durchgangsöffnungen 40, 42 durchsetzen, sodass das Flächengebilde 2 in den zwischen den Verbindungselementen 26, 36 liegenden Bereichen möglichst vollflächig und eben an der betreffenden Klemmleiste 22 zu liegen kommt.

Durch Herstellung einer Verbindung von erster und zweiter Klemmleiste 22, 24 mittels der komplementär ausgestalteten Verbindungselemente 26, 28, 36, 38 kann eine überaus homogene Flächenpressung zwischen den Innenseiten 25, 27 erster und zweiter Klemmleiste 22, 24 erreicht werden, sodass eine überaus homogene und dauerhaltbare Klemmwirkung auf den betreffenden Seitenrand 8, 9 des Flächengebildes 2 ausübbar ist.

Zur Verbesserung einer Klemmwirkung kann ferner vorgesehen sein, an zumindest einer der Innenseiten 25, 27 eine Fixierstruktur 30 zwischen oder außerhalb der Verbindungselemente 26, 28, 36, 38 vorzusehen. Die Fixierstruktur 30 kann insbesondere in Form einer Kamm- oder Zahnleiste 31 ausgestaltet sein und einzelne, vergleichsweise gering aufbauende oder klein ausgestaltete Zähne oder Häkchen aufweisen, mittels derer eine nochmals verbesserte Haftung des Flächengebildes 2 zwischen den Innenseiten 25, 27 erster und zweiter Klemmleiste 22, 24 herbeiführbar ist.

Wie schematisch in Fig. 4 gezeigt, können einzelne Fixierstrukturen 30 in unterschiedlichen Abständen in Querrichtung (z) als auch in unterschiedlichen Längen (y) an der betreffenden Klemmleiste 22 ausgestaltet sein. Es ist ferner denkbar, dass an beiden einander zugewandten Innenseiten 25, 27 auch miteinander in Eingriff gelangende oder versetzt zueinander angeordnete Fixierstrukturen 30 vorgesehen sind, mittels derer eine Klemmwirkung zwischen den Klemmleisten 22, 24 nochmals verbessert werden kann. Die Fixierstrukturen 30 können einstückig mit der jeweiligen Klemmleiste 22, 24 verbunden oder als integraler Bestandteil derselben ausgestaltet sein. Wenn die Klemmleisten 22, 24 beispielsweise als Kunststoffspritzgussbauteil ausgestaltet sind können die Fixierstrukturen 30 quasi kostenneutral verwirklicht werden.

Wie in Fig. 4 dargestellt, können an der ersten und der zweiten Klemmleiste 22, 24 unterschiedliche Paare von Verbindungselementen 26, 28 und 36, 38 vorgesehen sein. Vorliegend unterscheiden sich die Paare von Verbindungselementen 26, 28 und 36, 38 durch ihre geometrische Gestalt bzw. geometrische Formgebung. Die Verbindungselemente 26 sind als zylindrische oder vergleichsweise rund ausgestaltete Zapfen ausgebildet, während die Verbindungselemente 36 eine im Wesentlichen eckige Querschnittskontur aufweisen.

Dementsprechend sind auch die jeweils hierzu komplementär ausgestalteten Verbindungselemente 28, 38 der zweiten Klemmleiste 24 ausgestaltet. Auch die Durchgangsöffnungen 40, 42 im Randbereich des Flächengebildes 2 weisen eine den jeweils zapfenartig ausgestalteten Verbindungselementen 26, 28 entsprechende Kontur auf. Mittels derart unterschiedlich ausgebildeter Verbindungselemente 26, 36, 28, 38 kann erzwungen werden, dass eine wechselseitige Anordnung und Befestigung von Flächengebilde 2 und erster und zweiter Klemmleiste 22, 24 nur in einer einzigen, nämlich in der vorgegebenen Ausrichtung möglich ist.

Die Anordnung unterschiedlicher Durchgangsöffnungen 40, 42 im Randbereich des Flächengebildes stellt quasi eine Verbindungsschablone dar, die nur in korrekter Ausrichtung mit einer hierzu komplementär ausgestalteten Verbindungsschablone, welche von den Verbindungselementen 26, 28, 36, 38 gebildet wird, verbindbar ist. Anstelle oder ergänzend zu unterschiedlich geometrisch ausgebildeten Verbindungselementen 26, 28, 36, 38 und Durchgangsöffnungen 40, 42 kann auch vorgesehen sein, die Abstände zwischen benachbarten Verbindungselementen 26, 36 bzw. 28, 38 unregelmäßig auszugestalten, sodass eine wechselseitige Anordnung jeweils eine eindeutige Positionierung der Klemmleisten 22, 24 und des Flächengebildes 2 zueinander erfordert.

An den voneinander abgewandten Außenseiten 21, 23 von erster und zweiter Klemmleiste 22, 24 sind nach dem vorliegenden Ausführungsbeispiel jeweils nach außen abragende Befestigungselemente 32, 34 vorgesehen, mittels derer die von Klemmleisten 22, 24 gebildete Befestigungseinrichtung 20 mit zumindest einem von Ausstellelement 12 und Basiselement 10 verbindbar ist. Hierfür sind am Ausstellelement 12 als auch am Basiselement 10 jeweils eine längserstreckte Einstecköffnung 52, 50 vorgesehen, die der Form und Kontur der Befestigungseinrichtung 20 entsprechend die Befestigungseinrichtung 20 weitgehend vollständig aufnehmen kann.

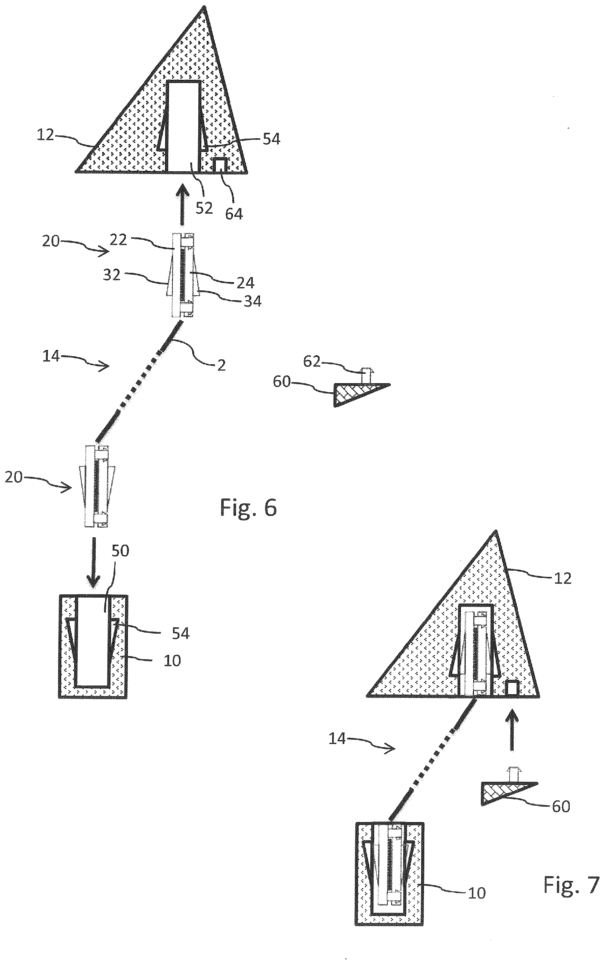

Insbesondere sind an den Innenseiten der Einstecköffnungen 50, 52 Gegenbefestigungselemente 54, beispielsweise in Form von Hinterschneidungen, vorgesehen, die mit Erreichen einer in Fig. 7 dargestellten Endmontagelage, beispielsweise form- oder reibschlüssig mit den Befestigungselementen 32, 34 der Klemmleisten 22, 24 zusammenwirken. Die Befestigungselemente 32, 34 sind vorliegend als ein mit einer Anlaufschräge versehendes Rastelement ausgestaltet, welches nach Art eines Befestigungsclips bei Erreichen der in Fig. 7 gezeigten Endmontagekonfiguration mit dem Gegenbefestigungselement 54, das heißt mit der an der Innenseite der Einstecköffnung 50, 52 ausgestalteten Hinterschneidung verrastet. Es ist grundsätzlich ausreichend, wenn lediglich eine der Klemmleisten 22, 24 ein nach außen abragendes Befestigungselement 32, 34 aufweist. Auch ist denkbar, dass an gegenüberliegenden Außenseiten 21, 23 von erster und zweiter Klemmleiste 22, 24 ausgestaltete Befestigungselemente 32, 34 in Längsrichtung der Klemmleisten 22, 24 voneinander beabstandet sind.

Zur Endmontage des Abweiserelements 14, beispielsweise am Ausstellelement 12, kann die Anbindung eines weiteren Verstärkungselements 60, wie in Fig. 7 gezeigt, vorgesehen sein. Das Verstärkungselement 60 kann beispielsweise nach Art eines Metall- oder Kunststoffbügels ausgebildet sein und sich zumindest bereichsweise entlang dem Ausstellelement 12 erstrecken. Auch das Verstärkungselement 60 kann mittels eines gesonderten Verbindungselements 62 mit dem Ausstellelement 12 verbunden werden. Das typischerweise als Kunststoffspritzgussbauteil gefertigte Ausstellelement 12 weist ein, beispielsweise in Form einer Einstecköffnung ausgestaltetes Verbindungselement 64 auf, welches das als Einsteckzapfen ausgebildete Verbindungselement 62 des Verstärkungselements aufnimmt.

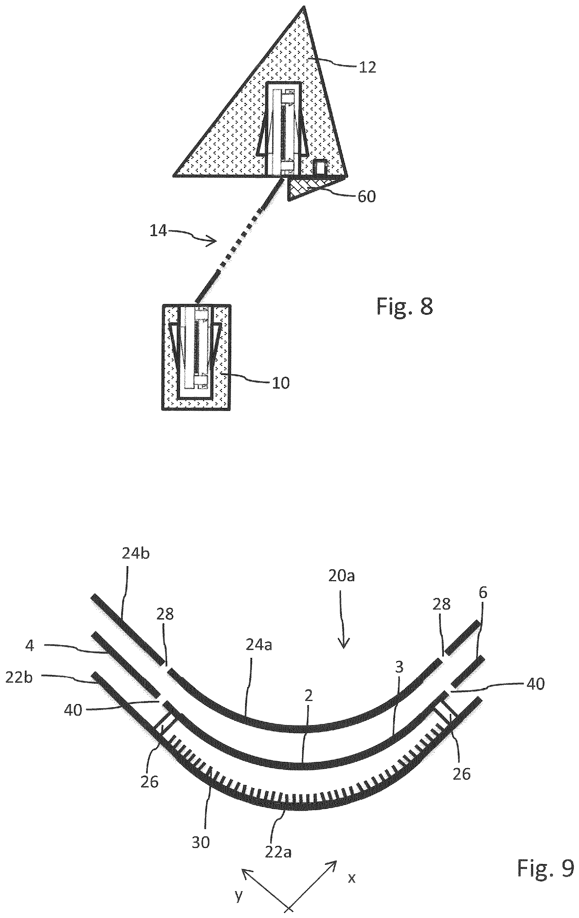

In der in Fig. 8 gezeigten Endmontagekonfiguration überdeckt das am Ausstellelement 12 angeordnete Verstärkungselement 60 die Einstecköffnung 52 zumindest bereichsweise, sodass das Verstärkungselement 60 nicht nur zu einer strukturellen Verstärkung des Ausstellelements 12, sondern gleichermaßen auch zu einer besonders sicheren und dauerhaltbaren Fixierung der betreffenden Befestigungseinrichtung 20 des Abweiserelements 14 am Ausstellelement 12 beiträgt.

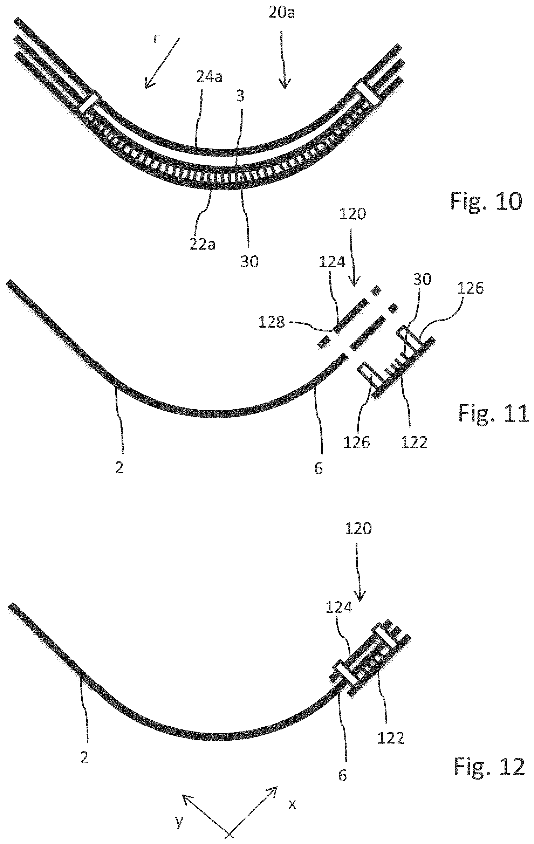

In den Fig. 9 und 10 ist eine in den Fig. 4 und 5 entsprechende Anbindung der Befestigungseinrichtung 20 in einem Krümmungsbereich des Flächengebildes 2 gezeigt. Die Klemmleisten 22, 24 können sich entlang der gesamten Quererstreckung, das heißt entlang des gesamten oberen oder unteren Seitenrands 8, 9 des Flächengebildes 2 erstrecken und insbesondere auch eine Anbindung des Flächengebildes 2 im Krümmungsbereich des Flächengebildes 2, etwa im Übergang zwischen Mittelstück 4 und den seitlichen Wangenabschnitten 3, 5 bereitstellen. Insoweit können auch die Klemmleisten 22, 24 an ihren gegenüberliegenden Enden gebogene Wangenabschnitte 22a, 22c, 24a, 24c aufweisen, die über einen im Wesentlichen geradlinig ausgestalteten Mittelabschnitt 22b, 24b miteinander verbunden sind.

In den Fig. 9 und 10 ist jeweils nur der linke äußere Bogen oder Wangenabschnitt 22a, 24a gezeigt. In der in Fig. 9 und Fig. 10 gezeigten Ausgestaltung weisen die Wangenabschnitte 24a, 22a miteinander korrespondierende Verbindungselemente 26, 28 auf, die durch hierfür vorgesehene Durchgangsöffnungen 40 im Wangenabschnitt 3 des Flächengebildes 2 hindurchführbar sind und mittels welchen die Wangenabschnitte 22a, 24a klemmend miteinander verbindbar sind. Auch in den gebogenen Wangenstücken 22a, 24a der Klemmleisten 22, 24 ist zumindest eine Fixierstruktur 30 an einer der Innenseiten der Klemmleisten 22, 24 vorgesehen. Bezogen auf ihren Krümmungsradius in der Darstellung gemäß den Fig. 9 und 10 von oben betrachtet, liegen die Wangenstücke 24a, 22a in Radialrichtung (r) klemmend aneinander an, sodass das Flächengebilde, insbesondere dessen Wangenabschnitt 3 im Bereich der Krümmung weitgehend faltenfrei und sicher gehalten ist.

In den Fig. 11 und 12 ist in einer weiteren Draufsicht von oben die Montage einer Verstärkungsstruktur 120 am linken Seitenrand 6 des Flächengebildes 2 gezeigt. Die Verstärkungsstruktur 120 kann nach oben an eine obere Befestigungseinrichtung 20 und nach unten an eine untere Befestigungseinrichtung 20, mithin an die mit den betreffenden Befestigungseinrichtungen 20 in Eingriff stehenden Ausstellelemente 12 und Basiselemente 10 angrenzen.

Ähnlich wie die Anbindung und wechselseitige Verbindung der Klemmleiste 22, 24, weist auch die Verstärkungsstruktur 120 miteinander korrespondierende Verstärkungsleisten, nämlich eine erste Verstärkungsleiste 122 und eine zweite Verstärkungsleiste 124 auf, die mit miteinander korrespondierend ausgestalteten Verbindungselementen 126, 128 versehen, miteinander verbindbar sind und dabei einen Abschnitt des Flächengebildes 2, nämlich den Seitenrand 6 zwischen sich einklemmen.

Die von den beiden Verstärkungsleisten 122, 124 gebildete Verstärkungsstruktur 120 dient neben der strukturellen Verstärkung des Seitenrands 6, 7 des Flächengebildes 2 ferner einer definierten Faltung des Flächengebildes 2 beim Anheben und Absenken des Ausstellelements 12. Es kann insbesondere vorgesehen sein, dass zumindest eine der Verstärkungsleisten 122, 124 mit einer Vorspannung versehen ist, die beispielsweise danach trachtet, die Verstärkungsstruktur 120 in ihre aufgespannte und in Fig. 1 gezeigte Gebrauchsstellung zu überführen.

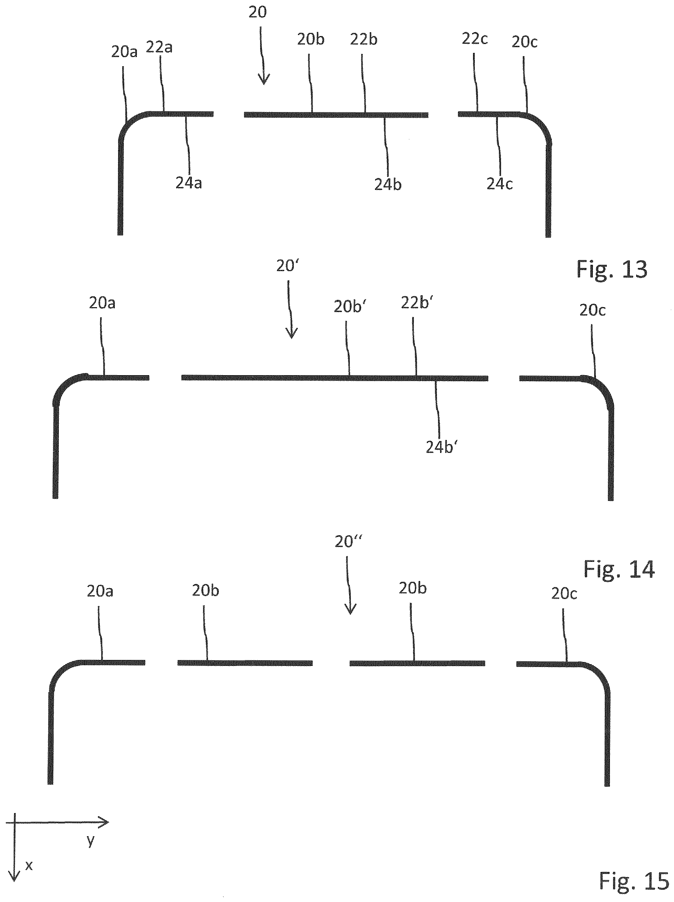

Die insbesondere entlang des gesamten oberen Seitenrands 8 und entlang des gesamten unteren Seitenrands 9 anordenbare Befestigungseinrichtung 20 kann entweder einteilig ausgestaltet sein, wobei die zu ihrer Bildung vorgesehenen Klemmleisten 22, 24 an ihren gegenüberliegenden Endabschnitten entsprechend gekrümmte Wangenstücke 22a, 22c, 24a, 24c aufweisen. Alternativ kann auch eine mehrfach segmentierte Ausgestaltung von Klemmleisten 22, 24 vorgesehen sein, wie dies aus den Fig. 13 bis 15 in schematischer Darstellung ohne das zugehörige Flächengebilde 2 skizziert ist.

Die Befestigungseinrichtung 20 gemäß Fig. 13 weist insgesamt drei Segmente, nämlich einen linken Wangenabschnitt 20a, einen Mittelabschnitt 20b und einen rechten Wangenabschnitt 20c auf. Jeder dieser Wangenabschnitte 20a, 20b, 20c ist jeweils von zwei dementsprechend ausgestalteten Klemmleistenstücken 22a, 22c, 24a, 24c gebildet. Der linke Wangenabschnitt 20a ist jeweils von ersten und zweiten linken Wangenstücken 22a, 24a gebildet. Der Mittelabschnitt 20b ist von ersten und zweiten Mittelstücken 22b, 24b gebildet, während der rechte Wangenabschnitt 20c von ersten und zweiten rechten Wangenabschnitten 22c, 24c gebildet ist.

Die Befestigungseinrichtung 20, insbesondere ein hiermit ausgestaltetes Abweiserelement 14 ist in Fahrzeugquerrichtung (y) vergleichsweise schmal. Zur Verbreiterung und zur Bildung eines breiteren Abweiserelements 14 für einen dementsprechend breiter konfigurierten Windabweiser 1 ist ein sich in Fahrzeugquerrichtung etwas länger erstreckendes Abweiserelement mit einer dementsprechend längeren Befestigungseinrichtung 20' bereitzustellen, wie dies in Fig. 14 angedeutet ist. Die Wangenabschnitte 20a, 20c können hierbei unverändert im Vergleich zur Ausgestaltung gemäß Fig. 13 beibehalten werden.

Eine Verlängerung der Befestigungseinrichtung 20, mithin des Abweiserelements 14 und des Windabweisers 1 ist allein durch Austausch des Mittelabschnitts 20b durch einen dementsprechend längeren Mittelabschnitt 20b' erreichbar. Der insoweit und im Vergleich zur Fig. 13 etwas länger ausgestaltete Mittelabschnitt 20b' der Befestigungseinrichtung 20' weist im Vergleich zu den Mittelstücken 22b, 24b der Fig. 13 dementsprechend länger ausgestaltete Mittelstücke 22b', 24b' erster und zweiter Klemmleisten 22, 24 auf. Alternativ kann anstelle des Austauschs des Mittelabschnitts 20b durch einen längeren Mittelabschnitt 20b' auch gemäß Fig. 15 vorgesehen sein, zwei identische oder unterschiedlich lange Mittelabschnitte 20b zu kombinieren, um insgesamt auf die geforderte Länge einer alternativen Befestigungseinrichtung 20" zu gelangen, wie dies in Fig. 15 gezeigt ist.

Zu den unterschiedlichen Ausgestaltungen der Befestigungseinrichtungen 20, 20', 20" gehören zur Bildung eines entsprechenden Abweiserelements 14 natürlich auch dementsprechend konfigurierte bzw. zugeschnittene Flächengebilde 2. Für eine Vielzahl unterschiedlich geometrisch ausgestalteter Flächengebilde und Abweiserelemente können durch geschickte Kombination einzelner Segmente von Klemmleisten 22, 24 jeweils unterschiedliche Längen und geometrische Konturen für Befestigungseinrichtungen 20, 20', 20" bereitgestellt werden.

Zur Bildung einzelner Wangenabschnitte und Mittelabschnitte ist es grundsätzlich ausreichend, eine vergleichsweise geringe Anzahl unterschiedlich langer oder unterschiedlich geometrisch ausgestalteter Standardbauteile für Klemmleisten 22, 24 bereitzustellen, sodass mit vergleichsweise geringen Werkzeug- und Investitionskosten auch kleine Stückzahlen von Windabweisern fertigungsrational und kostengünstig herstellbar sind.

### Bezugszeichenliste

- 1: Windabweiser
- 2: Flächengebilde
- 3: Wangenabschnitt
- 4: Mittelstück
- 5: Wangenabschnitt
- 6: Seitenrand
- 7: Seitenrand
- 8: Seitenrand
- 9: Seitenrand
- 10: Basiselement
- 10a: Schenkel
- 10b: Mittelstück
- 10c: Schenkel
- 11: Gelenk
- 12: Ausstellelement
- 12a: Schenkel
- 12b: Mittelstück
- 12c: Schenkel
- 14: Abweiserelement
- 16: Karosserie
- 20: Befestigungseinrichtung
- 20a: Wangenabschnitt
- 20b: Mittelabschnitt
- 20c: Wangenabschnitt
- 21: Außenseite
- 22: Klemmleiste
- 22a: Wangenabschnitt
- 22b: Mittelstück
- 22c: Wangenabschnitt
- 23: Außenseite
- 24: Klemmleiste
- 24a: Wangenabschnitt
- 24b: Mittelstück
- 24c: Wangenabschnitt
- 25: Innenseite
- 26: Verbindungselement
- 26a: Raststruktur
- 27: Innenseite
- 28: Verbindungselement
- 28a: Raststruktur
- 30: Fixierstruktur
- 31: Zahn-/Kammleiste
- 32: Befestigungselement
- 34: Befestigungselement
- 36: Verbindungselement
- 38: Verbindungselement
- 40: Durchgangsöffnung
- 42: Durchgangsöffnung
- 50: Einstecköffnung
- 52: Einstecköffnung
- 54: Gegenbefestigungselement
- 60: Verstärkungselement
- 62: Verbindungselement
- 64: Verbindungselement
- 120: Verstärkungsstruktur
- 122: Verstärkungsleiste
- 124: Verstärkungsleiste
- 126: Verbindungselement
- 128: Verbindungselement

## Patentansprüche

1. Abweiserelement (14) für einen Windabweiser (1), mit einem flexiblen Flächengebilde (2), welches mittels eines Ausstellelements (12) des Windabweisers (1) in eine gegenüber einer Grundstellung angehobene oder aufgespannte Gebrauchsstellung überführbar ist und welches entlang zumindest eines oberen oder unteren Seitenrands (8, 9) eine Befestigungseinrichtung (20) zur Befestigung am Ausstellelement (12), an einem Basiselement (10) des Windabweisers (1) oder an einer Kraftfahrzeugkarosserie aufweist, wobei die Befestigungseinrichtung (20) zumindest eine erste Klemmleiste (22) und zumindest eine zweite Klemmleiste (24) aufweist, die mittels miteinander korrespondierenden und das Flächengebilde (2) durchsetzenden Verbindungselementen (26, 28, 36, 38) miteinander verbunden sind und dabei den Seitenrand (8, 9) des Flächengebildes (2) zwischen der ersten und der zweiten Klemmleiste (22, 24) einklemmen, **dadurch gekennzeichnet, dass** an zumindest einer Außenseite (21, 23) zumindest einer der Klemmleisten (22, 24) ein Befestigungselement (32, 34) angeordnet ist, mittels welchem das Abweiserelement (14) mit zumindest einem von Ausstellelement (12), Basiselement (10) oder mit einer Kraftfahrzeugkarosserie verbindbar ist und wobei das Befestigungselement (32, 34) ein Rast- oder Clipselement aufweist, welches formschlüssig mit zumindest einem von Ausstellelement (12), Basiselement (10) oder mit einer Kraftfahrzeugkarosserie verbindbar ist.

2. Abweiserelement (14) nach Anspruch 1, wobei das Flächengebilde (2) entlang seines Seitenrands (8, 9) eine Anordnung von Durchgangsöffnungen (40, 42) aufweist, welche hinsichtlich ihrer Form und Position mit der Form und Position der Verbindungselemente (26, 28, 36, 38) korrespondieren.

3. Abweiserelement (14) nach Anspruch 1 oder 2, wobei an zumindest einer dem Flächengebilde (2) zugewandten Innenseite (25, 27) zumindest einer von erster und zweiter Klemmleiste (22, 24) eine mit dem Flächengebilde (2) in Klemmstellung gelangende Fixierstruktur (30) vorgesehen ist.

4. Abweiserelement (14) nach Anspruch 3, wobei die Fixierstruktur (30) eine sich dem Seitenrand (8, 9) entlang erstreckende Kamm- oder Zahnleiste (31) aufweist.

5. Abweiserelement (14) nach einem der vorhergehenden Ansprüche, wobei die Verbindungselemente (26, 28, 36, 38) an den einander zugewandten Innenseiten (25, 27) von erster und zweiter Klemmleiste (22, 24) in Geometrie und Position miteinander korrespondierende Zapfen und Aufnahmen aufweisen.

6. Abweiserelement (14) nach einem der vorhergehenden Ansprüche, wobei die Innenseite (25, 27) einer Klemmleiste (22, 24) oder wobei die Innenseiten (25, 27) der Klemmleisten (22, 24) zumindest zwei unterschiedlich ausgestaltete Verbindungselemente (26, 36) aufweisen, welche ausschließlich in einer von mehreren Ausrichtungen erster und zweiter Klemmleisten (22, 24) zueinander mit hiermit korrespondierenden Verbindungselementen (36, 38) verbindbar sind.

7. Abweiserelement (14) nach einem der vorhergehenden Ansprüche, wobei zumindest eine von erster und zweiter Klemmleiste (22, 24) mehrteilig ausgestaltet ist, zumindest zwei gebogene Wangenstücke (22a, 22c, 24a, 24d) und zumindest ein dazwischenliegendes im Wesentlichen geradliniges Mittelstück (22b, 24b) aufweist.

8. Windabweiser (1) zur Anordnung an einer Dachöffnung eines Kraftfahrzeugs, mit zumindest einem Ausstellelement (12) und einem optionalen Basiselement (10), wobei das Ausstellelement (12) zwischen einer Grundstellung und einer gegenüber der Grundstellung angehobenen oder aufgespannten Gebrauchsstellung beweglich an einer Karosserie (16) des Kraftfahrzeugs anordenbar ist, und mit einem Abweiserelement (14) nach einem der Ansprüche 1 bis 7, welches mittels seiner Befestigungseinrichtung (20) an zumindest einem von Ausstellelement (12), Basiselement (10) oder Kraftfahrzeugkarosserie angeordnet ist.

9. Windabweiser (1) nach Anspruch 8, wobei zumindest eines von Ausstellelement (12) und Basiselement (10) eine Einstecköffnung (50, 52) zur Aufnahme der Befestigungseinrichtung (20) des Abweiserelements (14) aufweist.

10. Windabweiser (1) nach Anspruch 9, wobei an zumindest einem von Ausstellelement (12) und Basiselement (10) ein die Einstecköffnung (50, 52) zumindest bereichsweise verschließendes Verstärkungselement (60) angeordnet ist.

11. Kraftfahrzeug mit einem Windabweiser (1) nach einem der vorhergehenden Ansprüche 8 bis 10.

12. Verfahren zur Herstellung eines Abweiserelements (14) nach einem der vorhergehenden Ansprüche 1 bis 7, mit den Schritten:
- Bereitstellen einer ersten und einer zweiten Klemmleiste (22, 24), welche miteinander korrespondierende Verbindungselemente (26, 28, 36, 38) aufweisen, und wobei an zumindest einer Außenseite (21, 23) zumindest einer der Klemmleisten (22, 24) ein Befestigungselement (32, 34) angeordnet ist, mittels welchem das Abweiserelement (14) mit zumindest einem Ausstellelement (12) oder einem Basiselement (10) eines Windabweisers (1) oder mit einer Kraftfahrzeugkarosserie verbindbar ist und wobei das Befestigungselement (32, 34) ein Rast- oder Clipselement aufweist, welches formschlüssig mit zumindest einem von Ausstellelement (12), Basiselement (10) oder mit der Kraftfahrzeugkarosserie verbindbar ist,
- Zuschneiden eines Flächengebildes (2),
- Einklemmen des Flächengebildes (2) zwischen der ersten und der zweiten Klemmleiste (22, 24) und wechselseitiges Verbinden erster und zweiter Klemmleiste (22, 24).

13. Verfahren nach Anspruch 12, wobei zur Herstellung unterschiedlich dimensionierter Abweiserelemente (14) unterschiedlich dimensionierte Klemmleisten (22, 24) bereitgestellt werden oder mehrere Klemmleistenstücke (22a, 22b, 22c, 24a, 24b, 24c) unterschiedlicher Größe und/oder Gestalt aus einer Auswahl an Klemmleisten (22, 24) oder Klemmleistenstücken (22b, 22b', 24b, 24b') ausgewählt werden.

## Claims

1. Deflection element (14) for a wind deflector (1), comprising a flexible fabric (2) which is transferable by means of a deployment element (12) of the wind deflector (1) into a use position raised or spread out in relation to a basic position and which has a fastening device (20) along at least one upper or lower side edge (8, 9) for fastening to the deployment element (12), to a base element (10) of the wind deflector (1) or to a motor vehicle body, wherein the fastening device (20) has at least one first clamping strip (22) and at least one second clamping strip (24), which clamping strips are connected to one another by means of mutually corresponding connecting elements (26, 28, 36, 38) passing through the fabric (2) and, in the process, clamp the side edge (8, 9) of the fabric (2) between the first and the second clamping strip (22, 24), **characterized in that** a fastening element (32, 34) is arranged on at least one outer side (21, 23) of at least one of the clamping strips (22, 24), by means of which fastening element the deflection element (14) is connectable to at least one of deployment element (12), base element (10) or to a motor vehicle body, and wherein the fastening element (32, 34) has a latching or clip element which is connectable in a form-fitting manner to at least one of deployment element (12), base element (10) or to a motor vehicle body.

2. Deflection element (14) according to Claim 1, wherein the fabric (2) has, along its side edge (8, 9), an arrangement of through openings (40, 42) which correspond in respect of their shape and position with the shape and position of the connecting elements (26, 28, 36, 38).

3. Deflection element (14) according to Claim 1 or 2, wherein a fixing structure (30) entering into a clamping position with the fabric (2) is provided on at least one inner side (25, 27), which faces the fabric (2), of at least one of first and second clamping strip (22, 24).

4. Deflection element (14) according to Claim 3, wherein the fixing structure (30) has a comb strip or toothed strip (31) extending along the side edge (8, 9).

5. Deflection element (14) according to one of the preceding claims, wherein the connecting elements (26, 28, 36, 38) have pins and receptacles which mutually correspond in geometry and position on the mutually facing inner sides (25, 27) of first and second clamping strip (22, 24).

6. Deflection element (14) according to one of the preceding claims, wherein the inner side (25, 27) of a clamping strip (22, 24) or wherein the inner sides (25, 27) of the clamping strips (22, 24) has/have at least two differently configured connecting elements (26, 36) which are connectable to connecting elements (36, 38) which correspond therewith only in one of a plurality of alignments of first and second clamping strips (22, 24) with respect to one another.

7. Deflection element (14) according to one of the preceding claims, wherein at least one of first and second clamping strip (22, 24) is of multi-part configuration, and has at least two curved cheek segments (22a, 22c, 24a, 24d) and at least one substantially rectilinear central segment (22b, 24b) lying in between.

8. Wind deflector (1) for arranging on a roof opening of a motor vehicle, with at least one deployment element (12) and an optional base element (10), wherein the deployment element (12) is arrangeable on a body (16) of the motor vehicle so as to be movable between a basic position and a use position raised or spread out in relation to the basic position, and with a deflection element (14) according to one of Claims 1 to 7, which is arranged by means of its fastening device (20) on at least one of deployment element (12), base element (10) or motor vehicle body.

9. Wind deflector according to Claim 8, wherein at least one of deployment element (12) and base element (10) has an insertion opening (50, 52) for receiving the fastening device (20) of the deflection element (14).

10. Wind deflector (1) according to Claim 9, wherein a reinforcing element (60) closing the insertion opening (50, 52) at least in regions is arranged on at least one of deployment element (12) and base element (10).

11. Motor vehicle with a wind deflector (1) according to one of the preceding Claims 8 to 10.

12. Method for producing a deflection element (14) according to one of the preceding Claims 1 to 7, with the steps:
- providing a first and a second clamping strip (22, 24) which have mutually corresponding connecting elements (26, 28, 36, 38), and wherein a fastening element (32, 34) is arranged on at least one outer side (21, 23) of at least one of the clamping strips (22, 24), by means of which fastening element the deflection element (14) is connectable to at least one deployment element (12) or a base element (10) of a wind deflector (1) or to a motor vehicle body, and wherein the fastening element (32, 34) has a latching or clip element which is connectable in a form-fitting manner to at least one of deployment element (12), base element (10) or to the motor vehicle body,
- trimming a fabric (2),
- clamping the fabric (2) between the first and the second clamping strip (22, 24) and mutually connecting first and second clamping strip (22, 24) .

13. Method according to Claim 12, wherein, in order to produce differently dimensioned deflection elements (14), differently dimensioned clamping strips (22, 24) are provided or a plurality of clamping strip segments (22a, 22b, 22c, 24a, 24b, 24c) of differing size and/or design are selected from a choice of clamping strips (22, 24) or clamping strip segments (22b, 22b', 24b, 24b').

## Revendications

1. Élément déflecteur (14) pour un déflecteur d'air (1), comportant une structure plane souple (2), laquelle, au moyen d'un élément dépliable (12) du déflecteur d'air (1), peut être transférée à une position d'utilisation relevée ou tendue par rapport à une position de base et laquelle comprend, le long d'au moins un bord latéral supérieur ou inférieur (8, 9), un dispositif de fixation (20) servant à la fixation à l'élément dépliable (12), à un élément de base (10) du déflecteur d'air (1) ou à une carrosserie de véhicule, dans lequel le dispositif de fixation (20) comprend au moins une première baguette de serrage (22) et au moins une deuxième baguette de serrage (24) qui sont reliées l'une à l'autre au moyen d'éléments de liaison (26, 28, 36, 38) correspondant les uns aux autres et traversant la structure plane (2) et serrent en l'occurrence le bord latéral (8, 9) de la structure plane (2) entre la première et la deuxième baguette de serrage (22, 24), **caractérisé en ce qu'**un élément de fixation (32, 34) est disposé sur au moins un côté extérieur (21, 23) d'au moins l'une des baguettes de serrage (22, 24), élément de fixation au moyen duquel l'élément déflecteur (14) peut être relié à au moins l'un parmi l'élément dépliable (12), l'élément de base (10) ou une carrosserie de véhicule, et l'élément de fixation (32, 34) comprenant un élément d'encliquetage ou d'enclipsage, lequel peut être relié par complémentarité de forme à au moins l'un parmi l'élément dépliable (12), l'élément de base (10) ou une carrosserie de véhicule.

2. Élément déflecteur (14) selon la revendication 1, dans lequel la structure plane (2) comprend, le long de son bord latéral (8, 9), un agencement d'ouvertures traversantes (40, 42), lesquelles correspondent en termes de forme et de position à la forme et à la position des éléments de liaison (26, 28, 36, 38).

3. Élément déflecteur (14) selon la revendication 1 ou 2, dans lequel une structure de fixation (30) parvenant dans la position de serrage avec la structure plane (2) est prévue sur au moins un côté intérieur (25, 27), tourné vers la structure plane (2), d'au moins l'une parmi la première et la deuxième baguette de serrage (22, 24).

4. Élément déflecteur (14) selon la revendication 3, dans lequel la structure de fixation (30) comprend une baguette formant peigne ou dentée (31) s'étendant le long du bord latéral (8, 9).

5. Élément déflecteur (14) selon l'une des revendications précédentes, dans lequel les éléments de liaison (26, 28, 36, 38) comprennent, sur les côtés intérieurs (25, 27) tournés l'un vers l'autre de la première et de la deuxième baguette de serrage (22, 24), des tenons et des logements correspondant les uns aux autres en termes de géométrie et de position.

6. Élément déflecteur (14) selon l'une des revendications précédentes, dans lequel le côté intérieur (25, 27) d'une baguette de serrage (22, 24) ou les côtés intérieurs (25, 27) des baguettes de serrage (22, 24) comprend/comprennent au moins deux éléments de liaison (26, 36) configurés différemment, lesquels ne peuvent être reliés à des éléments de liaison (36, 38) correspondant à ceux-ci qu'exclusivement dans l'une parmi plusieurs orientations des premières et deuxièmes baguettes de serrage (22, 24) les unes par rapport aux autres.

7. Élément déflecteur (14) selon l'une des revendications précédentes, dans lequel au moins l'une parmi la première et la deuxième baguette de serrage (22, 24) est configurée en plusieurs parties, et comprend au moins deux éléments formant joue (22a, 22c, 24a, 24d) courbés et au moins un segment central (22b, 24b) sensiblement rectiligne situé entre celles-ci.

8. Déflecteur d'air (1) destiné à être agencé au niveau d'une ouverture de toit d'un véhicule automobile, comportant au moins un élément dépliable (12) et un élément de base (10) éventuel, dans lequel l'élément dépliable (12) peut être agencé sur une carrosserie (16) du véhicule automobile de manière mobile entre une position de base et une position d'utilisation relevée ou tendue par rapport à la position de base, et comportant un élément déflecteur (14) selon l'une des revendications 1 à 7, lequel peut être agencé sur au moins l'un parmi l'élément dépliable (12), l'élément de base (10) ou la carrosserie de véhicule au moyen de son dispositif de fixation (20).

9. Déflecteur d'air (1) selon la revendication 8, dans lequel au moins l'un parmi l'élément dépliable (12) et l'élément de base (10) comprend une ouverture d'insertion (50, 52) destinée à loger le dispositif de fixation (20) de l'élément déflecteur (14).

10. Déflecteur d'air (1) selon la revendication 9, dans lequel un élément de renforcement (60) fermant l'ouverture d'insertion (50, 52) au moins dans certaines zones est agencé sur au moins l'un parmi l'élément dépliable (12) et l'élément de base (10).

11. Véhicule automobile comportant un déflecteur d'air (1) selon l'une des revendications précédentes 8 à 10.

12. Procédé de fabrication d'un déflecteur d'air (14) selon l'une des revendications précédentes 1 à 7, comportant les étapes suivantes :
- fourniture d'une première et d'une deuxième baguette de serrage (22, 24), lesquelles comprennent des éléments de liaison (26, 28, 36, 38) correspondant les uns aux autres, et dans lequel un élément de fixation (32, 34) est agencé sur au moins un côté extérieur (21, 23) d'au moins l'une des baguettes de serrage (22, 24), élément de fixation au moyen duquel l'élément déflecteur (14) peut être relié à au moins un élément dépliable (12) ou à un élément de base (10) d'un déflecteur d'air (1) ou à une carrosserie de véhicule, et dans lequel l'élément de fixation (32, 34) comprend un élément d'encliquetage ou d'enclipsage, lequel peut être relié par complémentarité de forme à au moins l'un parmi l'élément dépliable (12), l'élément de base (10) ou la carrosserie du véhicule,
- découpe d'une structure plane (2),
- serrage de la structure plane (2) entre la première et la deuxième baguette de serrage (22, 24) et liaison réciproque de la première et de la deuxième baguette de serrage (22, 24).

13. Procédé selon la revendication 12, dans lequel, pour la fabrication d'éléments déflecteurs (14) dimensionnés différemment, des baguettes de serrage (22, 24) dimensionnées différemment sont fournies ou plusieurs segments de baguette de serrage (22a, 22b, 22c, 24a, 24b, 24c) de différente dimensions et/ou formes sont sélectionnés à partir d'une sélection de baguettes de serrage (22, 24) ou de segments de baguette de serrage (22b, 22b', 24b, 24b').
